(19) Europäisches Patentamt / European Patent Office / Office européen des brevets

(11) **EP 2 469 116 B1**

(12) **FASCICULE DE BREVET EUROPEEN**

(45) Date de publication et mention
de la délivrance du brevet:
**11.09.2013 Bulletin 2013/37**

(51) Int Cl.:
*F16D 65/00* *(2006.01)*   *F16D 65/12* *(2006.01)*

(21) Numéro de dépôt: **11195227.1**

(22) Date de dépôt: **22.12.2011**

(54) **Disque de frein pour un véhicule ferroviaire**

Bremsscheibe für ein Schienenfahrzeug

brake disc for a railway vehicle

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.12.2010 FR 1061234**

(43) Date de publication de la demande:
**27.06.2012 Bulletin 2012/26**

(73) Titulaire: **Société Nationale des
Chemins de Fer Français - SNCF
75014 Paris (FR)**

(72) Inventeurs:
• **Lorang, Xavier**
**91300 Massy (FR)**
• **Clo, Pascal**
**Brignais 69530 (FR)**

(74) Mandataire: **Gevers France
81 boulevard Lazare Carnot
31000 Toulouse (FR)**

(56) Documents cités:
WO-A1-2009/075002   DE-A1-102004 007 899
DE-A1-102008 003 873   FR-A1- 2 698 425
GB-A- 2 232 449   US-A- 4 523 666
US-B1- 6 264 012

EP 2 469 116 B1

## Description

L'invention concerne un dispositif de freinage pour véhicule ferroviaire et, plus particulièrement, un dispositif de freinage comportant un disque de frein destiné à être monté sur un essieu de véhicule ferroviaire.

Un véhicule ferroviaire tel qu'un train à grande vitesse TGV comporte de manière classique une pluralité de voitures. Chaque voiture est supportée par au moins un bogie comportant deux essieux munis de roues destinées à être en contact avec les rails de la voie de chemin de fer.

Pour permettre au véhicule ferroviaire de ralentir lors de son entrée en gare, le véhicule comporte au moins un dispositif de freinage comportant d'une part un disque de frein et d'autre part une garniture de freinage destinée à venir en contact avec la surface du disque de frein de manière à transformer l'énergie cinétique de l'essieu en énergie thermique dissipée dans le disque de frein.

De manière classique, des roues sont montées aux extrémités de l'essieu, quatre disques de frein étant frettés sur l'essieu entre les roues. Ainsi, les roues, l'essieu et les disques de frein sont solidaires en rotation au cours du déplacement du véhicule ferroviaire. Une garniture de frein, montée solidairement au bogie, est associée à chaque disque de frein.

Un dispositif de freinage selon l'art antérieur comporte un disque de frein de forme circulaire ainsi qu'une garniture, connue de l'homme du métier, sur laquelle sont positionnés des plots destinés à venir en contact avec la surface latérale du disque de frein.

De manière classique, la garniture est entraînée en contact sur le disque de frein par un levier amplificateur, appelé également timonerie par l'homme du métier, relié par une liaison pivot au bogie et dont une première extrémité est solidaire de la garniture et dont une deuxième extrémité est solidaire d'une tige d'un vérin pneumatique pouvant être commandé par un opérateur. A l'arrivée d'un train en gare, l'opérateur active le dispositif de freinage ce qui commande le vérin pneumatique de manière à déplacer la deuxième extrémité du levier amplificateur. Du fait de la liaison pivot, la garniture se plaque contre la surface latérale du disque de frein pour dissiper l'énergie cinétique du train et le faire ralentir. En pratique, chaque disque de frein est « pris en sandwich » par deux garnitures de freinage.

Le principal inconvénient des dispositifs de freinage actuels est qu'il génère un crissement quasiment systématique lors de l'arrivée en gare. Un crissement est un grincement aigu, un bruit strident dont le niveau sonore maximum oscille, à un mètre du bord du quai, entre 100 et 110 dB lors du passage d'un train. Bien que le crissement n'affecte aucunement la sécurité du freinage, il présente une gêne importante aussi bien pour les voyageurs que pour les riverains des gares.

Le crissement résulte de vibrations auto-entretenues générées par les différents constituants du dispositif de freinage au cours du frottement des garnitures sur le disque de frein.

Le phénomène de frottement à l'échelle microscopique induit des vibrations du disque de frein à l'échelle macroscopique. Ainsi, contrairement à l'idée reçue, le crissement ne résulte pas du bruit provenant du contact des garnitures sur le disque de frein mais résulte principalement d'une vibration du disque de frein.

Le document US 4 523 666 A montre un disque de frein d'après le préambule de la revendication 1.

Afin d'éliminer au moins certains de ces inconvénients, l'invention concerne un disque de frein destiné à être monté solidaire d'un essieu de véhicule ferroviaire monté rotatif autour d'un axe déterminé, le disque de frein comportant deux faces latérales opposées, le disque de frein étant agencé pour vibrer selon une pluralité de modes propres, au moins deux modes propres principaux du disque de frein étant rendus instables lors de l'application d'une force de frottement pour un coefficient de frottement déterminé sur au moins une face latérale du disque de frein, chaque mode propre principal instable étant défini par un taux de divergence, la périphérie du disque de frein comportant un relief et présentant une dissymétrie autour dudit axe de manière à ce que les taux de divergence desdits modes propres principaux demeurent négatifs ou nuls lors de l'application de la force de frottement pour le coefficient de frottement déterminé, de préférence, de l'ordre de 0,4.

Ainsi de manière avantageuse, la forme du disque de frein permet de s'affranchir du couplage de mode propres de vibration intrinsèques au disque lors du freinage. Etant donné que les taux de divergence des modes propres ne sont pas positifs, les modes propres principaux ne deviennent pas instables lors de l'application de la force de freinage ce qui limite le crissement.

Autrement dit, l'invention concerne un disque de frein destiné à être monté solidaire d'un essieu de véhicule ferroviaire monté rotatif autour d'un axe déterminé, le disque de frein comportant deux faces latérales opposées, le disque de frein étant agencé pour vibrer selon une pluralité de modes propres à une fréquence de vibration déterminée, au moins deux modes propres principaux du disque de frein étant rendus instables lors de l'application d'une force de frottement de coefficient de frottement déterminé sur au moins une face latérale du disque de frein, la périphérie du disque de frein comportant un relief et présentant une dissymétrie autour dudit axe de manière à ce que les fréquences de vibration des modes propres principaux du disque de frein soient distantes l'une de l'autre.

Une dissymétrie périphérique du disque entraîne un écartement des fréquences de vibration des modes propres principaux du disque de frein. Il en résulte que, lors du freinage, le coefficient de frottement des garnitures sur les surfaces latérales du disque de frein n'est pas suffisant pour entraîner un couplage des modes propres principaux et donc un crissement. Le crissement lié au freinage est donc atténué. De préférence, les fréquences de vibration des modes propres principaux du disque de frein sont distantes l'une de l'autre d'au moins 80 Hz. De manière préférée, les fréquences de vibration des modes propres principaux du disque de frein sont distantes l'une de l'autre d'au moins 100 Hz.

En outre, une dissymétrie périphérique ne perturbe pas le freinage, les surfaces latérales du disque de frein destinées à venir en contact avec des garnitures n'étant pas modifiées. Cela permet de remplacer un disque de frein selon l'art antérieur par un disque de frein selon l'invention sans modifier d'autres éléments des dispositifs de freinage.

Le disque de frein comporte un corps axisymétrique, de préférence circulaire, et au moins un segment en saillie formé sur ledit corps. Ainsi, seule la périphérie du disque de frein possède un relief. Le corps axisymétrique comporte un centre de gravité de corps placé sur son axe, le disque de frein comporte un centre de gravité de disque décalé par rapport à l'axe du corps axisymétrique. Du fait du décalage de son centre de gravité, le disque de frein possède un balourd qui permet d'écarter les fréquences de vibration des modes propres principaux du disque de frein. Autrement dit, le balourd du disque de frein permet d'atténuer le crissement de frein ce qui est avantageux.

De manière préférée, le corps axisymétrique et le segment en saillie forment un ensemble monobloc.

Selon un aspect de l'invention, le corps axisymétrique comporte deux faces latérales opposées séparées par une tranche périphérique, le segment en saillie étant formé sur la tranche périphérique dudit corps du disque.

Selon un autre aspect de l'invention, le disque de frein comportant un centre, le segment en saillie s'étend sur un arc circulaire dont l'angle ouvert est défini par rapport au centre du disque. Un arc circulaire ne perturbe que faiblement la rotation du disque de frein, le balourd étant limité.

Selon un aspect préféré, l'angle ouvert est compris entre 10° et 30°, de préférence égal à 20°, ce qui permet d'éviter un couplage des modes principaux et donc un crissement de forte amplitude.

De préférence, le segment en saillie comporte un matériau amortisseur afin de limiter l'amplitude des vibrations du disque de frein et donc l'amplitude du crissement.

Selon une forme de réalisation préférée, le disque de frein comporte au moins deux segments en saillie formés sur ledit corps. En paramétrant l'écartement angulaire des segments en saillie, on peut écarter des fréquences de modes principaux de basses ou hautes fréquences.

De préférence, les segments en saillie sont distants d'une distance angulaire au moins égale à 80°, de préférence égale à 90° afin d'écarter des fréquences de modes principaux de basses fréquences.

De préférence, les segments en saillie sont distants sont distants l'un de l'autre d'une distance angulaire d'environ 20° afin d'écarter des fréquences de modes principaux de hautes fréquences.

Selon une forme de réalisation préférée, le disque de frein comporte au moins trois segments en saillie formés sur ledit corps. Une telle dissymétrie périphérique permet d'écarter simultanément les fréquences de modes principaux de basses et de hautes fréquences.

De préférence, les écarts angulaires définis entre deux segments en saillie consécutifs sont différents. A titre d'exemple, les écarts angulaires formés entre les segments en saillie sont différents de 120°. Ainsi, il existe une dissymétrie axiale du disque de frein ce qui induit un balourd du disque et limite le crissement.

De préférence, le disque de frein comporte un segment en saillie principal et deux segments en saillie auxiliaires de dimensions inférieures à celles du segment en saillie principal. Les segments en saillie limitent de manière localisée le couplage des modes principaux de hautes fréquences et basses fréquences.

De préférence encore, le segment en saillie principal est distant du segment en saillie auxiliaire le plus proche d'une distance angulaire au moins égale à 80°, de préférence égale à 90°. Le segment en saillie principal en combinaison avec les segments en saillie auxiliaires limitent le couplage des modes principaux de basses fréquences.

De préférence toujours, les segments en saillie auxiliaires sont séparés l'un de l'autre d'une distance angulaire d'environ 20°. Les segments en saillie auxiliaires limitent le couplage des modes principaux de hautes fréquences.

L'invention concerne en outre un dispositif de freinage comportant au moins un disque de frein tel que présenté précédemment et une garniture destinée à appliquer une force de frottement sur ledit disque de frein.

Plus les fréquences des modes de vibration principaux du disque de frein sont écartées et moins les fréquences des modes de vibration principaux de l'ensemble formé du disque de frein et de la garniture sont susceptibles de se coupler et donc de générer un crissement de forte amplitude.

L'invention vise également un véhicule ferroviaire comportant un essieu et au moins un dispositif de freinage tel que présenté précédemment, le disque de frein du dispositif de freinage étant monté sur ledit essieu.

De préférence, le véhicule ferroviaire comporte un essieu et au moins quatre dispositifs de freinage tels que présentés précédemment, les disques de frein des dispositifs de freinage étant montés sur ledit essieu.

De préférence encore, les disques de frein sont décalés angulairement les uns avec les autres sur l'essieu de manière à limiter le balourd de l'essieu au cours de sa rotation. L'essieu est ainsi globalement équilibré ce qui augmente sa durée de vie.

L'invention sera mieux comprise à la lecture de la description qui va suivre, donnée uniquement à titre d'exemple, et se référant au dessin annexé sur lequel :

- la figure 1 est une représentation partielle en perspective d'un essieu de véhicule ferroviaire sur lequel sont montés une roue et deux disques de frein selon l'invention ;
- la figure 2 est une représentation schématique d'un dispositif de freinage selon l'invention;
- la figure 3 est une modélisation de la déformation selon un mode propre de vibration déterminé d'ensemble d'un disque de frein selon l'art antérieur lors du contact avec sa garniture lors du freinage, le disque de frein étant représenté sans sa garniture;
- la figure 4A est une représentation schématique vue de face d'un disque de frein selon une première forme de réalisation de l'invention ;
- la figure 4B est une représentation schématique vue de face d'un disque de frein selon une deuxième forme de réalisation de l'invention ;
- la figure 4C est une représentation schématique vue de face d'un disque de frein selon une troisième forme de réalisation de l'invention ;
- la figure 5 est une représentation schématique en perspective du disque de frein de la figure 4C ;
- la figure 6 est une représentation schématique d'une forme de réalisation particulière d'un segment en saillie du disque de frein selon l'invention vu de côté ;
- la figure 7 est un graphique représentant l'évolution des fréquences de deux modes propres de déformation principaux pour un disque de frein selon l'art antérieur (trait discontinu) et pour un disque de frein selon l'invention (trait continu) en fonction du coefficient de frottement ;
- la figure 8 est un graphique représentant l'évolution du taux de divergence de deux modes propres de déformation principaux pour un disque de frein selon l'art antérieur (trait discontinu) en fonction de la fréquence desdits modes propres au cours de l'application d'une force de frottement avec un coefficient de frottement croissant;
- la figure 9 est un graphique représentant l'évolution du taux de divergence des deux modes propres de déformation principaux pour un disque de frein selon l'invention (trait continu) en fonction de la fréquence desdits modes propres au cours de l'application d'une force de frottement avec coefficient de frottement croissant ; et
- la figure 10 est un graphique représentant l'évolution du taux de divergence des modes propres de déformation principaux pour un disque de frein selon l'art antérieur (trait discontinu) et pour un disque de frein selon l'invention (trait continu) en fonction du coefficient de frottement.

Le dispositif de freinage pour véhicule ferroviaire selon l'invention se distingue d'un dispositif de freinage selon l'art antérieur par son disque de frein qui est de nature différente. Le dispositif de freinage est classiquement monté sur un essieu du véhicule ferroviaire de manière à transformer l'énergie cinétique de l'essieu en énergie thermique qui est dissipée dans le disque de frein.

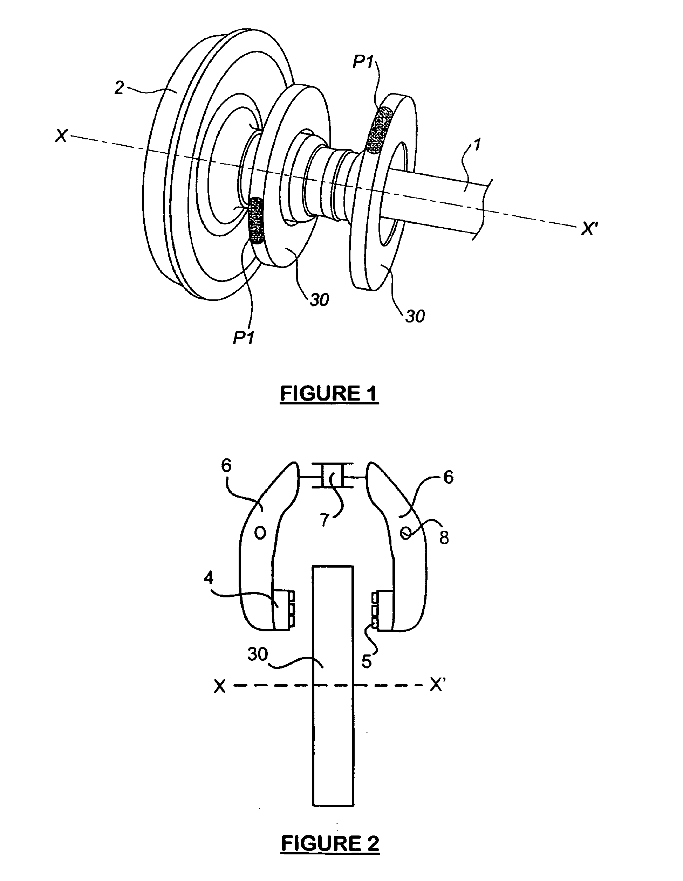

De manière classique, en référence à la figure 1 représentant une vue partielle d'un essieu 1 d'axe XX' d'un bogie d'un véhicule ferroviaire, des roues 2 sont montées aux extrémités de l'essieu 1 et, indépendamment des roues 2, quatre disques de frein 30 sont frettés sur l'essieu 1 entre les roues 2. Ainsi, les roues 2, l'essieu 1 et les disques de frein 30 sont solidaires en rotation au cours du déplacement du véhicule ferroviaire.

En référence à la figure 2 représentant un dispositif de freinage selon l'invention, ce dernier comporte un disque de frein 30 d'axe XX' ainsi qu'une garniture 4, connue de l'homme du métier, sur laquelle sont positionnés des plots de frottement 5 destinés à venir en contact avec la surface latérale du disque de frein 30. Une garniture de frein 4, montée solidairement au bogie, est associée à chaque disque de frein 30.

De manière classique, la garniture 4 est entraînée en contact sur le disque de frein 30 par un levier amplificateur 6 relié par une liaison pivot 8 au bogie et dont une première extrémité est solidaire de la garniture 4 et dont une deuxième extrémité est solidaire d'une tige d'un vérin pneumatique 7 pouvant être commandé par un opérateur. A l'arrivée d'un train en gare, l'opérateur active le dispositif de freinage ce qui commande le vérin pneumatique 7 de manière à déplacer la deuxième extrémité du levier amplificateur 6. Du fait de la liaison pivot 8, les plots de frottement 5 de la garniture 4 se plaquent contre la surface latérale du disque de frein 30 pour dissiper l'énergie cinétique du train et le faire ralentir. En pratique, chaque disque de frein 30 est « pris en sandwich » par deux garnitures de freinage 4.

Pour agir sur les quatre disques de frein 30, chaque essieu 1 comporte quatre vérins pneumatiques 7 reliés au même circuit pneumatique. Le bogie comporte pour sa part deux circuits pneumatiques indépendants, un pour chaque essieu 1.

Un disque de frein standard 3 est une pièce de révolution et possède une forme circulaire. Autrement dit, un disque de frein standard 3 possède une symétrie axiale d'axe XX' et est qualifié, de manière classique, de disque axisymétrique.

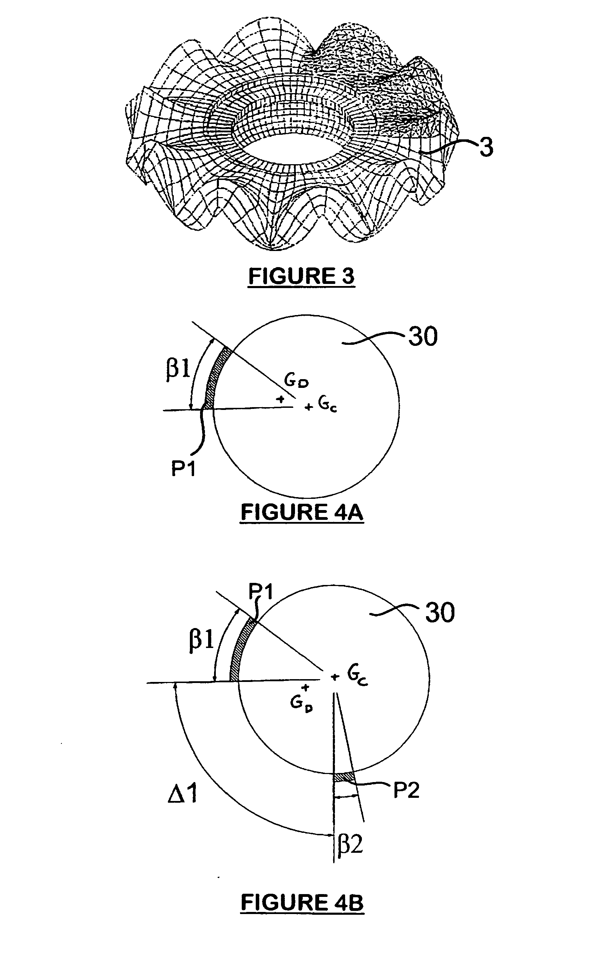

De manière connue, un disque de frein standard 3 est configuré pour vibrer selon une pluralité de modes propres de vibration, également désignés modes propres structuraux, dont la fréquence de vibration est définie en fonction de la structure dimensionnelle du disque de frein 3. A titre d'exemple, un mode de vibration d'un disque de frein standard 3 associé à des plots de frottement 5 de la garniture 4 est représenté sur la figure 3, le disque de frein standard 3 étant représenté sans la garniture 4.

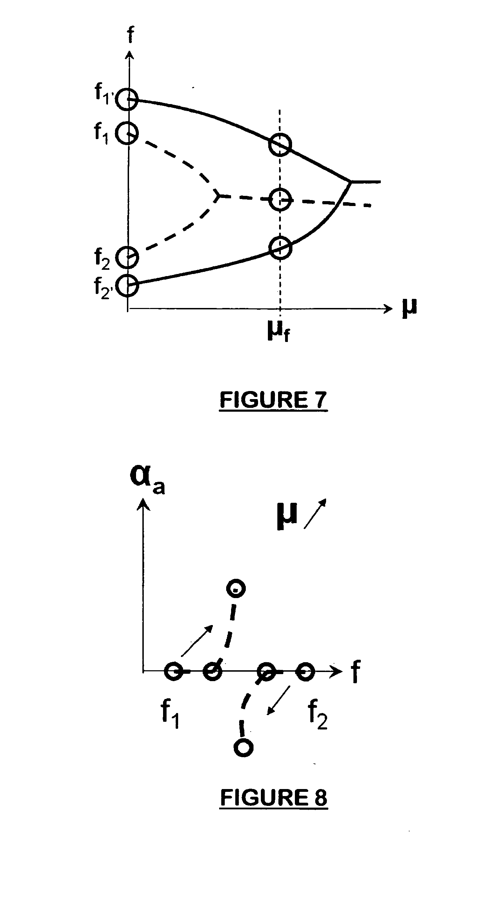

Du fait de sa forme circulaire et de son caractère axisymétrique, les fréquences des modes propres de vibration d'un disque de frein standard 3 en contact avec une garniture (de diamètre 640 mm et d'épaisseur 45 mm) sont proches les unes des autres. En référence à la figure 7, un disque de frein standard 3 comporte deux modes propres de vibration principaux dont les fréquences de vibration $f_1$, $f_2$ sont, à titre d'exemple, respectivement égales à 10050 Hz et 10030 Hz en l'absence de freinage, c'est-à-dire en contact mais avec un coefficient de frottement nul.

Un mode propre de vibration principal est un mode propre de vibration qui est susceptible de se coupler avec un autre mode propre de vibration suite à l'application d'une force de frottement avec coefficient de frottement garniture/disque déterminé pour former des modes instables du système concerné. Un mode propre de vibration principal se distingue des autres modes du fait de sa contribution importante au crissement lors de son couplage. Par souci de clarté, les modes propres de vibration principaux sont désignés par la suite modes principaux.

Pour un disque de frein donné, on peut calculer, de manière connue, un champ de déplacement dudit disque de frein qui correspond aux vecteurs de déplacement de tout point du disque au cours du temps. Un champ de déplacement u est fonction d'une position x et du temps t et est ainsi classiquement référencé u(x,t).

De manière connue, le champ de déplacement du disque u(x,t) comporte, d'une part, un champ de déplacement d'équilibre référencé ue(x) et, d'autre part, un champ de déplacement vibratoire référencé u*(x,t).

De manière également connue, le champ de déplacement vibratoire u*(x,t) est défini pour chacun des modes vibratoires du disque. A titre d'exemple, pour un mode vibratoire d'instabilité $u_0$, le champ de déplacement vibratoire s'exprime ainsi :

$$u^*(x,t) = Re(u_0(x)e^{j2\pi ft})e^{\alpha t}$$

avec Re correspondant à la partie réelle, $u_0(x)$ un mode vibratoire d'instabilité donné, f la fréquence associée au mode d'instabilité $u_0$, j l'unité imaginaire et $\alpha$ le taux de divergence associé au mode d'instabilité $u_0$.

Le taux de divergence $\alpha$, également connu de l'homme du métier sous la désignation de taux de croissance modal, est obtenu par calcul à partir, par exemple, d'une modélisation sous forme d'un maillage du disque de frein. La méthode de calcul d'un taux de divergence pour un disque de frein lors d'un freinage avec un coefficient de frottement déterminé est connu en particulier par la thèse de doctorat de l'Ecole Polytechnique de Xavier Lorang intitulée « Instabilité vibratoire des structures en contact frottant : Application au crissement des freins de TGV » qui a été présentée le 4 octobre 2007.

Lors du freinage, les plots de frottement 5 de la garniture 4 du dispositif de freinage sont mis en contact avec la surface latérale du disque de frein standard 3 de manière à frotter contre ce dernier afin de ralentir le véhicule ferroviaire. Le coefficient de frottement $\mu$ appliqué par la garniture 4 sur le disque de frein standard 3 correspond au rapport de la force tangentielle sur la force normale par rapport à la surface latérale du disque de frein standard 3. Ce coefficient de frottement $\mu$ induit une excitation du disque de frein standard 3 ce qui modifie la fréquence des modes principaux. En référence à la figure 7 représentant en traits discontinus l'évolution des fréquences au fur et à mesure du freinage, les deux fréquences $f_1$ et $f_2$ ont tendance à se rapprocher l'une vers l'autre ce qui entraîne un couplage des deux modes principaux, les fréquences étant alors égales. Le couplage des modes principaux génère un crissement pour le coefficient de frottement $\mu_f$ associé au freinage.

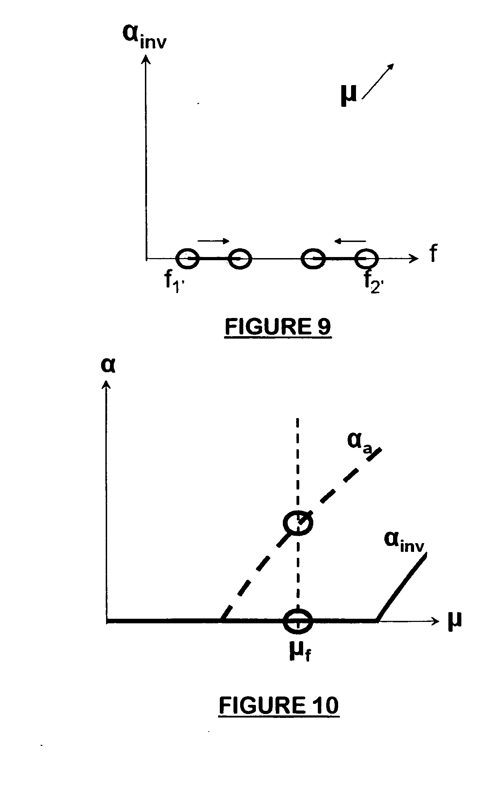

En référence aux figures 8 et 10, les taux de divergence $\alpha_a$ associés aux modes principaux d'un disque de frein standard 3 ont tendance à augmenter en valeur absolue au cours du freinage ce qui entraîne un déplacement important des fréquences $f_1$, $f_2$ desdits modes principaux. Plus les taux de divergence sont élevés et plus les modes sont instables ce qui augmente le crissement. Ainsi, pour un coefficient de frottement $\mu_f$ associé au freinage, les fréquences des modes principaux sont égales comme représenté sur la figure 8 et un couplage de modes apparaît ce qui génère le crissement.

Pour éliminer cet inconvénient, la demanderesse propose un disque de frein 30 comportant une dissymétrie périphérique de manière à ce que les fréquences de modes principaux du disque de frein 30 soient distantes les unes des autres, de préférence d'au moins 80 Hz.

En modifiant la structure dimensionnelle d'un disque de frein standard 3 pour créer un disque de frein amélioré 30, on modifie directement le taux de divergence $\alpha$ associé aux modes propres principaux du disque de frein standard 3. De manière préférée, le disque de frein 30 selon l'invention 30 comporte une dissymétrie périphérique agencée pour que le taux de divergence $\alpha_{inv}$ associé aux modes principaux du disque de frein 30 soit nul au cours du freinage, en particulier, pour un coefficient de frottement $\mu_f$ de l'ordre de 0,4 associé au freinage comme représenté sur les figures 9 et 10. Le taux de divergence $\alpha_{inv}$ étant nul, les modes propres principaux demeurent stables.

Ainsi, lors du freinage, les fréquences des modes principaux se rapprochent mais ne se couplent pas pour un coefficient de frottement $\mu_f$ associé au freinage comme représenté en traits continus sur la figure 7. Le couplage des modes principaux du disque de frein 30 étant éliminé, le crissement est limité.

● **Première forme de réalisation**

Selon une première forme de réalisation de l'invention, en référence à la figure 4A, le disque de frein 30 comporte un segment en saillie P1 situé à la périphérie du disque de frein 30 de manière à former un relief périphérique. Autrement dit, le disque de frein 30 comporte un corps circulaire et un segment en saillie P1 formé sur la tranche du corps circulaire. De préférence, le corps circulaire correspond à un disque de frein standard 3 connu de l'art antérieur. De manière classique, le centre de gravité du corps circulaire est placé sur son axe.

La structure dimensionnelle du disque de frein 30 étant modifiée, il en résulte une modification des fréquences et des taux de divergence des modes principaux du disque de frein 30. Un segment en saillie P1 s'étend sur un arc circulaire β dont l'angle ouvert est défini par rapport au centre du disque de frein 30.

A titre d'exemple, la longueur périphérique β1 du segment en saillie P1 est ici égal à 20° comme représenté sur la figure 4A et possède une épaisseur de l'ordre de 20 mm, de préférence 19 mm. L'épaisseur d'un segment en saillie est définie radialement par rapport au centre du disque de frein 30. Un tel segment en saillie P1 permet de définir un disque de frein 30 dont les fréquences des modes principaux sont écartées de l'ordre de 80 Hz. On évite ainsi un couplage des modes principaux lors du freinage ce qui limite le crissement. Le centre de gravité du disque de frein est décalé de l'axe du corps ce qui engendre un balourd du disque.

● **Deuxième forme de réalisation**

Une deuxième forme de réalisation est décrite en référence à la figure 4B. Les références utilisées pour décrire les éléments de structure ou fonction identique, équivalente ou similaire à celles des éléments de la figure 4A sont les mêmes, pour simplifier la description. D'ailleurs, l'ensemble de la description de la forme de réalisation de la figure 4A n'est pas reprise, cette description s'appliquant aux éléments de la figure 4B lorsqu'il n'y a pas d'incompatibilités. Seules les différences notables, structurelles et fonctionnelles, sont décrites.

En référence à la figure 4B représentant un disque de frein 30 selon une deuxième forme de réalisation de l'invention, le disque de frein non- axisymétrique comporte deux segments en saillie P1, P2 formés à la périphérie du disque de frein 30, c'est- à- dire, sur la tranche du disque de frein 30.

En outre du premier segment en saillie P1, le disque de frein 30 comporte un deuxième segment en saillie P2 dont la longueur périphérique β2 est ici égal à 15° et possède une épaisseur de l'ordre de 20 mm, de préférence 19 mm, identique à celle du premier segment en saillie P1. Deux segments en saillie permettent de définir un disque de frein 30 dont les fréquences des modes principaux sont écartées de l'ordre de 80 Hz. On évite ainsi un couplage des modes principaux lors du freinage ce qui limite le crissement. En particulier, en configurant l'écartement angulaire Δ1 entre les deux segments en saillie P1, P2 à la périphérie du disque de frein 30, on détermine les modes propres que l'on cherche à écarter.

Dans cet exemple, en référence à la figure 4B, le premier segment en saillie P1 est séparé du deuxième segment en saillie P2 d'une distance angulaire d'environ 90° ce qui permet d'empêcher le couplage des modes propres dont les fréquences sont les plus basses. Le centre de gravité du disque de frein est décalé de l'axe du corps ce qui engendre un balourd du disque.

Du fait du relief formé à la périphérie du disque de frein 30, les fréquences de vibration $f_1'$, $f_2'$ des modes principaux du disque de frein 30 de la figure 4B sont respectivement égales à 10080 Hz et 10000 Hz en l'absence de freinage comme représenté sur la figure 7.

Lors du freinage, les plots de frottement 5 de la garniture 4 sont mis en contact avec la surface latérale du disque de frein 30 de manière à frotter contre ce dernier afin de ralentir le véhicule ferroviaire. Le coefficient de frottement $\mu_f$ relatif à la force de frottement appliquée par la garniture 4 modifie les fréquences $f_1'$, $f_2'$ des modes principaux. Au fur et à mesure du freinage, les deux fréquences $f_1'$, $f_2'$ ont tendance à se rapprocher l'une vers l'autre comme représenté sur les figures 7 et 9.

Dans le cas présent, les fréquences de vibration $f_1'$, $f_2'$ du disque de frein selon l'invention 30 sont éloignées l'une de l'autre d'une plage de fréquence de 80 Hz. Ainsi, malgré le rapprochement des fréquences de vibration $f_1'$, $f_2'$, aucun couplage de modes n'apparaît comme représenté sur la figure 7. En référence à la figure 9, du fait de la présence des deux segments en saillie P1, P2 en périphérie du disque de frein 30, le taux de convergence $\alpha_a$ demeure nul au cours du freinage et les fréquences $f_1'$, $f_2'$ ne deviennent jamais égales. Les sources du crissement sont alors fortement limitées. En effet, les taux de divergence des modes principaux n'étant jamais positifs, ces derniers ne deviennent jamais instables lors du freinage ce qui limite le crissement par couplage de modes.

● **Troisième forme de réalisation**

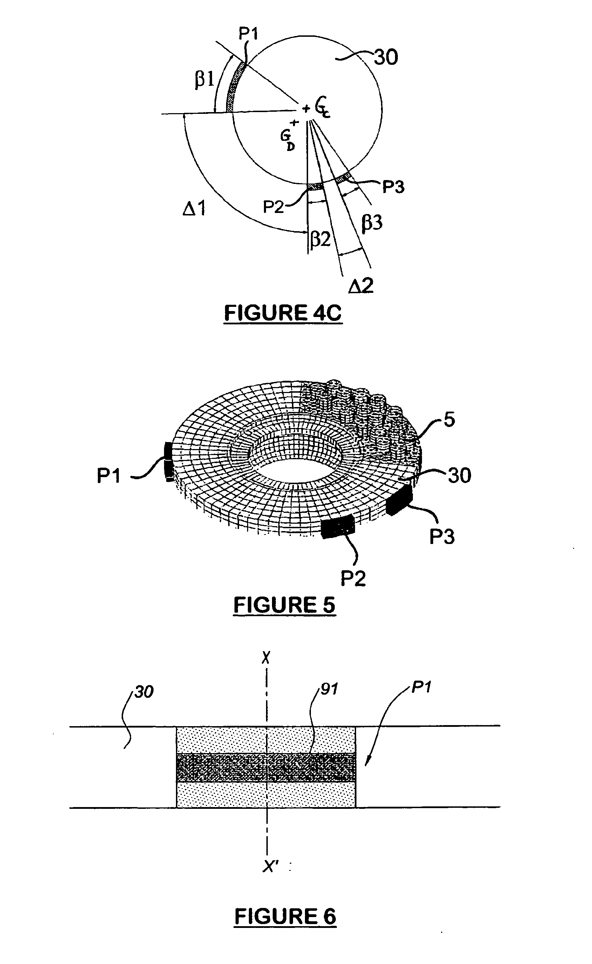

Une troisième forme de réalisation est décrite en référence à la figure 4C. Les références utilisées pour décrire les éléments de structure ou fonction identique, équivalente ou similaire à celles des éléments de la figure 4B sont les mêmes, pour simplifier la description. D'ailleurs, l'ensemble de la description de la forme de réalisation de la figure 4B n'est pas reprise, cette description s'appliquant aux éléments de la figure 4C lorsqu'il n'y a pas d'incompatibilités. Seules les différences notables, structurelles et fonctionnelles, sont décrites.

En référence à la figure 4C représentant un disque de frein 30 selon une troisième forme de réalisation de l'invention, le disque de frein 30 comporte trois segments en saillie P1, P2, P3 formés à la périphérie du disque de frein 30, c'est- à- dire, sur la tranche du disque de frein 30.

En référence aux figures 4C, 5 et 6, le disque de frein 30 comporte, dans cet exemple, un premier segment en saillie P1 dont la longueur périphérique est supérieure à celle des deuxième et troisième segments en saillie P2-P3. Par la suite, le premier segment en saillie P1 est désigné segment principal P1 tandis que les deuxième et troisième segments en saillie P2-P3 sont désignés segments auxiliaires P2-P3.

La longueur périphérique β1 du segment principal P1 est ici d'environ 20° tandis que la longueur périphérique β2, β3 d'un segment auxiliaire P2-P3 est d'environ 15°. Les segments en saillie P1, P2, P3 possèdent, dans cet exemple, une épaisseur de l'ordre de 20 mm, de préférence 19 mm.

Les segments en saillie P1-P3 sont répartis à la périphérie du disque de frein 30 de manière à modifier la structure du disque de frein 30 afin que les fréquences des modes principaux soient distantes les unes des autres. En référence aux figures 5 et 6, le segment principal P1 est séparé du segment auxiliaire P2 le plus proche d'une distance angulaire Δ1 d'environ 90° de manière à écarter les fréquences des modes principaux de basses fréquences, comme détaillé dans le deuxième mode de réalisation de l'invention. Le centre de gravité du disque de frein est décalé de l'axe du corps ce qui engendre un balourd du disque.

Les segments auxiliaires P2-P3 sont séparés l'un de l'autre d'une distance angulaire Δ2 d'environ 20° de manière à venir écarter les fréquences des modes principaux de hautes fréquences. Ainsi, avec uniquement trois segments en saillie P1-P3, on élimine d'une part un risque de couplage à basses fréquences et d'autre part un risque de couplage à hautes fréquences. Les sources du crissement sont alors fortement limitées.

De manière préférée, pour un disque de frein donné, on identifie les modes principaux qui contribuent le plus au crissement. Les modes principaux étant identifiés, on définit le nombre, la longueur, l'épaisseur et le matériau des segments en saillie pour former un disque de frein 30 dont les modes principaux sont écartés les uns des autres pour un coefficient de frottement donné.

En paramétrant la distance angulaire entre les segments en saillie P1-P3, on peut agir sur toute la bande de fréquence d'intérêt des modes principaux d'un disque de frein 30.

Dans les modes de réalisation précédents, les segments en saillie P1-P3 sont formés dans la même matière que le disque de frein 30, de préférence, en acier. En outre, le disque de frein 30 et les segments en saillie P1-P3 forment un ensemble monobloc. Il va de soi que les segments en saillie P1-P3 pourraient également être rapportés à la périphérie du disque de frein 30, par exemple, par soudage. Par comparaison avec un ensemble en plusieurs éléments, un ensemble monobloc permet d'écarter de manière précise des fréquences de modes principaux déterminés sans tenir compte des perturbations liées à l'interface entre les segments en saillie P1-P3 et le disque de frein 30.

Dans une variante de l'invention, en référence à la figure 6, un ou plusieurs segments en saillie P1-P3 comportent un matériau amortisseur du type élastomère agencé pour modifier l'amplitude des modes propres de vibration du disque de frein 30. En référence à la figure 6, le segment en saillie en acier est usiné dans son épaisseur de manière à former un logement radial dans lequel est disposée une couche élastomère 91.

Autrement dit, la dissymétrie périphérique du disque de frein 30 permet d'atténuer le risque de couplage de modes, c'est à dire les causes du crissement, tandis que le matériau amortisseur 92 permet d'atténuer l'amplitude des vibrations, c'est-à-dire les effets du crissement.

L'invention a été présentée avec un, deux ou trois segments en saillie P1-P3 mais il va de soi que tout disque de frein 30 avec au moins un segment en saillie périphérique P1-P3 pourrait convenir.

Afin que le disque de frein présente une dissymétrie autour de son axe, les écarts angulaires entre des segments en saillie consécutifs sont différents. Ainsi, pour un disque de frein comportant uniquement deux segments en saillie, les segments en saillie ne sont pas écartés angulairement de 180°. De même, pour un disque de frein comportant uniquement trois segments en saillie, les segments en saillie ne sont pas écartés angulairement de 120°. Il va de soi que les segments en saillie peuvent avoir les mêmes dimensions ou des dimensions différentes.

De manière très avantageuse, la surface latérale du disque de frein 30, qui est utilisée pour le freinage avec les garnitures 4, est identique à celle d'un disque de frein standard 3 ce qui ne perturbe pas la qualité du freinage, le disque de frein 30 étant uniquement modifié à sa périphérie.

Ainsi, les disques de frein 30 selon l'invention peuvent avantageusement remplacer les disques de frein selon l'art antérieur dans les dispositifs de freinage existants, les autres éléments des dispositifs de freinage n'étant pas modifiés ce qui limite les coûts.

De manière préférée, plusieurs dispositifs de freinage sont montés sur un essieu 1 de véhicule ferroviaire, les disques de frein 30 des dispositifs de freinage étant décalés angulairement par rapport à l'axe XX' de l'essieu 1 de manière à limiter un balourd de l'essieu 1 au cours de sa rotation. A titre d'exemple, en référence à la figure 1, pour quatre disques de frein 30 frettés sur un essieu 1, les disques de frein 30 sont décalés angulairement de 90° les uns avec les autres ce qui permet d'équilibrer l'essieu 1 de manière globale. En effet, bien que chaque disque de frein comporte individuellement un balourd, l'ensemble des disques de frein est avantageusement équilibré.

L'invention a été présentée pour écarter les fréquences des modes principaux d'un disque de frein 30 d'un dispositif de freinage mais il va de soi qu'il permet également d'écarter les fréquences des modes principaux du système comportant un disque de frein 30 et des plots de frottement 5 des garnitures 4. De manière avantageuse, en considérant un tel système, on analyse de manière très précise le couplage des modes principaux du système en tenant compte de l'aspect vibratoire lié aux plots de frottement 5.

De manière très avantageuse, un disque de frein 30 avec au moins deux segments en saillie P1-P3 décalés d'au moins 80° comme représenté sur les figures 4B et 4C permet de créer une dissymétrie circonférentielle pour un système comportant un disque de frein 30 et des plots de frottement 5 des garnitures 4.

En effet, d'un point de vue vibratoire, il est important que les plots de frottement 5 et le disque de frein 30 ne forment pas un système présentant une symétrie périphérique. Comme illustré sur les figures 4A-4C, chaque corps axisymétrique des disques de frein 30 comporte un centre de gravité de corps Gc situé sur son axe. Chaque disque de frein 30 comporte un centre de gravité de disque Gd qui est décalé de l'axe du corps axisymétrique du fait de la présence de segments en saillie P1-P3 à la périphérie du corps axisymétrique. Il en résulte un balourd du disque de frein 30 qui écarte les fréquences de vibration des modes propres principaux du disque de frein et ainsi limite le phénomène de crissement.

## Revendications

1. Disque de frein (30) destiné à être monté solidaire d'un essieu (1) de véhicule ferroviaire monté rotatif autour d'un axe déterminé (XX'), le disque de frein (30) comportant deux faces latérales opposées, le disque de frein (30) étant agencé pour vibrer selon une pluralité de modes propres à une fréquence de vibration déterminée, au moins deux modes propres principaux du disque de frein (30) étant rendus instables lors de l'application d'une force de frottement pour un coefficient de frottement déterminé sur au moins une face latérale du disque de frein (30), la périphérie du disque de frein (30) comportant un relief et présentant une dissymétrie autour dudit axe (XX') de manière à ce que les fréquences de vibration des modes propres principaux du disque de frein (30) soient distantes l'une de l'autre, disque **caractérisé par le fait que** le disque de frein (30) comporte un corps axisymétrique, de préférence circulaire, et au moins un segment en saillie (P1-P3) formé sur ledit corps, le corps axisymétrique comportant un centre de gravité de corps (Gc) placé sur son axe, le disque de frein (30) comportant un centre de gravité de disque (Gd) décalé par rapport à l'axe du corps axisymétrique.

2. Disque selon la revendication 1, dans lequel le corps axisymétrique et le segment en saillie (P1-P3) forment un ensemble monobloc.

3. Disque selon l'une des revendications 1 à 2, dans lequel, le corps axisymétrique comporte deux faces latérales opposées séparées par une tranche périphérique, le segment en saillie (P1-P3) étant formé sur la tranche périphérique dudit corps du disque.

4. Disque selon l'une des revendications 1 à 3, dans lequel, le disque de frein (30) comportant un centre, le segment en saillie (P1-P3) s'étend sur un arc circulaire dont l'angle ouvert est défini par rapport au centre du disque.

5. Disque selon la revendication 4, dans lequel l'angle ouvert est compris entre 10° et 30°, de préférence égal à 20°.

6. Disque selon l'une des revendications 1 à 5, dans lequel, le segment en saillie (P1-P3) comporte un matériau amortisseur (91).

7. Disque selon l'une des revendications 1 à 6, dans lequel le disque de frein (30) comporte au moins deux segments en saillie (P1-P3) formés sur ledit corps.

8. Disque selon l'une des revendications 1 à 7, dans lequel le disque de frein (30) comporte au moins trois segments en saillie (P1-P3) formés sur ledit corps.

9. Disque selon la revendication 8, dans lequel les écarts angulaires définis entre deux segments en saillie consécutifs (P1-P2 ; P2-P3 ; P3-P1) sont différents.

10. Disque selon l'une des revendications 8 à 9, dans lequel le disque de frein (30) comporte un segment en saillie principal (P1) et deux segments en saillie auxiliaires (P2-P3) de dimensions inférieures à celles du segment en saillie principal (P1).

11. Disque selon la revendication 10, dans lequel le segment en saillie principal (P1) est distant du segment en saillie auxiliaire (P2-P3) le plus proche d'une distance angulaire au moins égale à 80°, de préférence égale à 90°.

12. Disque selon l'une des revendications 8 à 11, dans lequel les segments en saillie auxiliaires (P2-P3) sont distants l'un de l'autre d'une distance angulaire d'environ 20°.

13. Dispositif de freinage comportant au moins un disque de frein (30) selon l'une des revendications précédentes et une garniture (4) destinée à appliquer une force de frottement sur ledit disque de frein (30).

14. Véhicule ferroviaire comportant un essieu (1) et au moins deux dispositifs de freinage selon la revendication 13, les disques de frein (30) des deux dispositifs de freinage étant montés sur ledit essieu (1) et décalés angulairement l'un par rapport à l'autre par rapport à l'axe (XX') dudit essieu (1) de manière à limiter un balourd dudit essieu (1).

**Patentansprüche**

1. Bremsscheibe (30) zur festen Montage an einer Gleisfahrzeugachse (1), die um eine bestimmte Achse (XX') herum drehbar gelagert ist, wobei die Bremsscheibe (30) zwei entgegengesetzte Seitenflächen umfasst, wobei die Bremsscheibe (30) angeordnet ist, um gemäß einer Vielzahl von Eigenschwingungen auf einer bestimmten Schwingungsfrequenz zu schwingen, wobei mindestens zwei Haupteigenschwingungen der Bremsscheibe (30) bei Ausübung einer Reibungskraft für einen bestimmten Reibungskoeffizienten auf mindestens einer Seitenfläche der Bremsscheibe (30) instabil gemacht werden, wobei der Umfang der Bremsscheibe (30) eine Erhöhung umfasst und um die Achse (XX') herum eine Unsymmetrie aufweist, so dass die Schwingungsfrequenzen der Haupteigenschwingungen der Bremsscheibe (30) voneinander entfernt sind, wobei die Bremsscheibe (30) **dadurch gekennzeichnet, dass** sie einen bevorzugt kreisförmigen axialsymmetrischen Körper und mindestens ein vorstehendes Segment (P1 bis P3), das auf dem Körper gebildet ist, umfasst, wobei der axialsymmetrische Körper einen Körperschwerpunkt (Gc) umfasst, der sich auf seiner Achse befindet, wobei die Bremsscheibe (30) einen Scheibenschwerpunkt (Gd) umfasst, der im Verhältnis zur Achse des axialsymmetrischen Körpers versetzt ist.

2. Scheibe nach Anspruch 1, wobei der axialsymmetrische Körper und das vorstehende Segment (P1 bis P3) eine einstückige Baugruppe bilden.

3. Scheibe nach einem der Ansprüche 1 bis 2, wobei der axialsymmetrische Körper zwei entgegengesetzte Seitenflächen umfasst, die durch einen umlaufenden Rand getrennt sind, wobei das vorstehende Segment (P1 bis P3) auf dem umlaufenden Rand des Scheibenkörpers gebildet ist.

4. Scheibe nach einem der Ansprüche 1 bis 3, wobei die Bremsscheibe (30) einen Mittelpunkt umfasst und sich das vorstehende Segment (P1 bis P3) auf einem Kreisbogen erstreckt, dessen offener Winkel im Verhältnis zum Mittelpunkt der Scheibe definiert ist.

5. Scheibe nach Anspruch 4, wobei der offene Winkel zwischen 10° und 30° und bevorzugt bei 20° liegt.

6. Scheibe nach einem der Ansprüche 1 bis 5, wobei das vorstehende Segment (P1 bis P3) ein dämpfendes Material (91) umfasst.

7. Scheibe nach einem der Ansprüche 1 bis 6, wobei die Bremsscheibe (30) mindestens zwei vorstehende Segmente (P1 bis P3) umfasst, die auf dem Körper gebildet sind.

8. Scheibe nach einem der Ansprüche 1 bis 7, wobei die Bremsscheibe (30) mindestens drei vorstehende Segmente (P1 bis P3) umfasst, die auf dem Körper gebildet sind.

9. Scheibe nach Anspruch 8, wobei die Winkelabweichungen, die zwischen zwei aufeinanderfolgenden vorstehenden Segmenten (P1-P2; P2-P3; P3-P1) definiert sind, unterschiedlich sind.

10. Scheibe nach einem der Ansprüche 8 bis 9, wobei die Bremsscheibe (30) ein vorstehendes Hauptsegment (P1) und zwei vorstehende Nebensegmente (P2-P3), deren Abmessungen kleiner als die des vorstehenden Hauptsegments (P1) sind, umfasst.

11. Scheibe nach Anspruch 10, wobei das vorstehende Hauptsegment (P1) von dem nächstgelegenen vorstehenden Nebensegment (P2-P3) um einen Winkelabstand entfernt ist, der mindestens gleich 80° und bevorzugt gleich 90° ist.

12. Scheibe nach einem der Ansprüche 8 bis 11, wobei die vorstehenden Nebensegmente (P2-P3) um einen Winkelabstand von ungefähr 20° entfernt sind.

13. Bremsvorrichtung, umfassend mindestens eine Bremsscheibe (30) nach einem der vorhergehenden Ansprüche und einen Belag (4), der dazu gedacht ist, eine Reibungskraft auf die Bremsscheibe (30) auszuüben.

14. Gleisfahrzeug mit einer Radachse (1) und mindestens zwei Bremsvorrichtungen nach Anspruch 13, wobei die Bremsscheiben (30) der beiden Bremsvorrichtungen auf der Radachse (1) gelagert sind und winkelmäßig im Verhältnis zueinander im Verhältnis zu der Achse (XX') der Radachse (1) derart versetzt sind, dass sie eine Unwucht der Radachse (1) einschränken.

**Claims**

1. Brake disc (30) for mounting so as to be rigidly connected to a railway vehicle axle (1) rotatably mounted about a predetermined axis (XX'), the brake disc (30) comprising two opposed lateral faces, the brake disc (30) being arranged to vibrate in a plurality of modes suitable for a predetermined vibration frequency, at least two main suitable modes for the brake disc (30) being destabilised upon application of a friction force for a predetermined friction coefficient to at least one lateral face of the brake disc (30), the periphery of the brake disc (30) comprising a relief and being axisymmetric about said axis (XX') in such a way that the vibration frequencies of the main suitable modes for the brake disc (30) are remote from one another, **characterised in that** the brake disc (30) comprises a preferably circular axisymmetric body and at least one protruding segment (P1-P3) formed on said body, the axisymmetric body comprising a bodily centre of gravity (Gc) along its axis, the brake disc (30) comprising a disc centre of gravity (Gd) which is offset with respect to the axis of the axisymmetric body.

2. Disc according to claim 1, wherein the axisymmetric body and the protruding segment (P1-P3) form a single-piece unit.

3. Disc according to any of claims 1 to 2, wherein the axisymmetric body comprises two opposed lateral faces which are separated by a peripheral portion, the protruding segment (P1-P3) being formed on the peripheral portion of said disc body.

4. Disc according to any of claims 1 to 3, wherein, since the brake disc (30) comprises a centre, the protruding segment (P1-P3) extends on a circular arc having an open angle which is defined in relation to the disc centre.

5. Disc according to claim 4, wherein the open angle is between 10° and 30°, preferably being equal to 20°.

6. Disc according to any of claims 1 to 5, wherein the protruding segment (P1-P3) comprises a shock-absorbent material (91).

7. Disc according to any of claims 1 to 6, wherein the brake disc (30) comprises at least two protruding segments (P1-P3) formed on said body.

8. Disc according to any of claims 1 to 7, wherein the brake disc (30) comprises at least three protruding segments (P1-P3) formed on said body.

9. Disc according to claim 8, wherein the angular spacings defined between two consecutive protruding segments (P1-P2; P2-P3; P3-P1) are different.

10. Disc according to any of either claim 8 or claim 9, wherein the brake disc (30) comprises a main protruding segment (P1) and two auxiliary protruding segments (P2-P3), which have smaller dimensions than the main protruding segment (P1).

11. Disc according to claim 10, wherein the main protruding segment (P1) is spaced from the closest auxiliary protruding segment (P2-P3) by an angular spacing which is at least equal to 80°, preferablybeing equal to 90°.

12. Disc according to any of claims 8 to 11, wherein the auxiliary protruding segments (P2-P3) are spaced from one another by an angular spacing of approximately 20°.

13. Braking device comprising at least one brake disc (30) according to any of the preceding claims and a lining (4) for applying a friction force to said brake disc (30).

14. Railway vehicle comprising an axle (1) and at least two braking devices according to claim 13, the brake discs (30) of the two braking devices being mounted on said axle (1) and angularly offset with respect to one another in relation to the axis (XX') of said axle (1) in such a way as to limit an imbalance of said axle (1).

**FIGURE 1**

**FIGURE 2**

**FIGURE 3**

**FIGURE 4A**

**FIGURE 4B**

**FIGURE 4C**

**FIGURE 5**

**FIGURE 6**

**FIGURE 7**

**FIGURE 8**

$\alpha_{inv}$

$\mu$

$f_{1'}$ $f_{2'}$ $f$

**FIGURE 9**

$\alpha$

$\alpha_a$

$\alpha_{inv}$

$\mu_f$ $\mu$

**FIGURE 10**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 4523666 A

**Littérature non-brevet citée dans la description**

• **XAVIER LORANG.** *Instabilité vibratoire des structures en contact frottant : Application au crissement des freins de TGV,* 04 Octobre 2007